# EUROPÄISCHE PATENTANMELDUNG

(11) **EP 2 500 245 A2**
(43) Veröffentlichungstag der Anmeldung: **19.09.2012**
(21) Anmeldenummer: 12159806.4
(22) Anmeldetag: 16.03.2012
(51) Int. Cl.: B62D 63/06, B62K 27/00, B62K 27/10, B62B 7/12

(54) **Einspur-Anhänger**

(30) Priorität: 18.03.2011 DE 202011004150 U
(71) Anmelder: Weiss, Thomas, 5080 Laufenburg (CH)
(72) Erfinder: Weiss, Thomas, 5080 Laufenburg (CH)
(74) Vertreter: Alber, Norbert

(57) **Zusammenfassung**

Einspur-Fahrradanhänger, die mittels Stützrädern abgekoppelt als z. B. Einkaufswagen verwendet werden können, sind dann besonders gut manövrierbar, wenn zum Einen die Stützräder über die Breite des Anhängers hinaus ausfahrbar sind, um eine gute Abstützung zu ergeben, und die Schiebestange auf der bezügliche der Stützräder gegenüberliegenden Seite angeordnet ist, was eine besonders gute Manövrierbarkeit ergibt.

## Beschreibung

### I. Anwendungsgebiet

Die Erfindung betrifft einen Einspur-Anhänger für z. B. Fahrräder, bei dem der Anhänger im vorderen Bereich über eine Anhängekupplung und/oder Deichsel mit dem ziehenden Fahrzeug verbunden ist und im Heckbereich in der Mitte ein Hauptrad zum Fahren auf dem Untergrund aufweist.

### II. Technischer Hintergrund

Zum einen besitzen derartige Einspur-Anhänger meist eine eigene ausklappbare Mittelstütze.

Nach Abkuppeln des Anhängers vom Fahrrad wird dieser entweder mit seinem Vorderteil auf dem Untergrund abgelegt oder über die am Anhänger vorhandene Mittelstütze auf dem Untergrund abgestellt.

Der Nachteil ist, dass ein solcher Anhänger außer der Anhängerfunktion keine weiteren Funktionen, z. B. für andere Transportzwecke und -arten, erfüllen kann.

### III. Darstellung der Erfindung

### a) Technische Aufgabe

Es ist daher die Aufgabe gemäß der Erfindung, einen gattungsgemäßen Anhänger zur Verfügung zu stellen, der über die Anhängerfunktion hinaus wenigstens eine weitere Funktion, z. B. als Einkaufswagen oder Kinderschiebewagen, erfüllen kann und schnell von der einen auf die andere Funktion umgebaut werden kann, sowie einen Baukasten, mit dessen Einzelteilen Varianten des Anhängers erstellt werden können.

### b) Lösung der Aufgabe

Diese Aufgabe wird durch die Merkmale des Anspruches 1 gelöst. Vorteilhafte Ausführungsformen ergeben sich aus den Unteransprüchen.

Dadurch, dass die Stützräder nicht nur aktivierbar und deaktivierbar, sondern in der aktivierten Stellung insbesondere auch seitlich über die Breite des übrigen Anhängers hinaus ausfahrbar sind, kann der Anhänger selbst schmal gebaut werden, wie es für die Funktion als Fahrradanhänger notwendig ist, und im abgekoppelten Schiebezustand wird mit den Stützrädern dennoch eine gute Kippsicherheit erreicht.

Das Aktivieren und Deaktivieren der Stützräder kann auf unterschiedliche Weise erreicht werden:
Eine Möglichkeit ist das Deaktivieren durch Hochklappen um eine in Längsrichtung liegende Schwenkachse unter das Chassis des Anhängers.
Eine andere Möglichkeit besteht darin, dass die Stützräder um eine horizontale Querachse hochgeschwenkt werden.
Eine weitere Möglichkeit besteht darin, dass die Stützräder einzeln oder beide an einem Seiten- oder Mittelständer angeordnet sind, und ihrerseits gegenüber diesem Ständer aktivierbar sind.

Vorzugsweise sind die Stützräder sowohl in der aktivierten als auch in der deaktivierten Stellung fixierbar, und insbesondere einrastend.

Eine Schiebestange für den Schiebebetrieb des Anhängers ist dann auf der von den Stützrädern gegenüber liegenden Seite, also am Heck des Anhängers, vorgesehen, die demontierbar und/oder zwischen einer aktivierten oder eine deaktivierten Position klappbar ist.

In einer bevorzugten Ausführungsform ist jedes der Stützräder am freien Ende eines relativ zum Rahmen des Anhängers ausfahrbaren Rohrstutzens angeordnet, und dieser ist drehbar und in Querrichtung ausfahrbar gegenüber eine Führungsmuffe, die beispielsweise am Rahmen des Anhängers befestigbar ist.

Die Stützräder sind - zumindest in ihrem aktivierten Zustand - um eine aufrecht stehende Achse verschwenkbar, insbesondere frei drehbar, also vorzugsweise gegenüber dem sie tragenden Rohrstutzen.

Eine besonders gut handhabbare Lösung ergibt sich, wenn die Stützräder um die Querachse schwenkbar sind und im deaktivierten Zustand in Ausnehmungen in der Unterseite der Bodenwanne des Anhängers aufgenommen sind und das Verschwenken um die Querachse durch Betätigen eines Fußschalters mit dem Fuß erfolgt, der ein Verschwenken vom aktivierten in den deaktivierten Zustand und umgekehrt - mit ein und demselben oder zwei getrennten Fußschaltern - bewirkt. Die Fußschalter sind quer von dem Querrohr abstrebend, an dessen Enden die Stützräder drehfest bezüglich der Querachse befestigt sind.

Dabei wird vorzugsweise die Schwenkbewegung mit dem Fußschalter nur eingeleitet und nach Überschreiben eines bestimmten Schwenkpunktes der Rest der Schwenkbewegung automatisch mittels eines Federelementes, etwa einer Gasdruckfeder vollzogen, die an einem von dem Querrohr quer abstrebenden Schwenkhebel angreift und je nach Stellung in die eine oder andere Schwenkrichtung unterstützend wirkt, abhängig davon, auf welcher Seite des Totpunktes sich das Querrohr befindet.

Das seitliche Ausfahren der Stützräder in die aktivierte Stellung erfolgt dadurch, dass die Stützräder an einer gekröpften Winkelstrebe befestigt sind, die ihrerseits drehfest, aber axial verschiebbar, auf dem Querrohr befestigt sind, in einer Führungskulisse laufen, die beim Verschwenken gleichzeitig diese Winkelstrebe und damit auch die Stützräder zur Seite nach außen schieben. Die Führungskulisse kann in dem Lagerbock integriert sein, mit dem das Querrohr im Rahmen des Chassis befestigt ist.

Die Ausnehmungen zur Ablage der Stützräder in der deaktivierten Position in der Bodenwanne sind so geformt, dass durch das heranschwenkende Stützrad und dessen Schwenkbarkeit um die im aktivierten Zustand eine Hochachse darstellende Achse die Stützräder automatisch in einer definierten Position in den Ausnehmungen abgelegt werden. In einer zweiten, gewichtsmäßig optimierten, Bauform besteht der Sitz aus einem in der Aufsicht betrachtet rechteckig umlaufenden Rohrrahmen, der in der Seitenansicht eine konvexe Krümmung nach unten besitzt. Von der oberen zur unteren Querstrebe dieses Rahmens ist ein Textilmaterial gespannt, in der das Kind liegt, an der die Sicherheitsgurte für das Kind befestigt sind und auch seitliche Führungspolster zum Beispiel mittels Klettband oder ähnlichem befestigt sein können.

Die seitlichen Streben des Rahmens, die in Längsrichtung verlaufen, sind dabei in Führungsmuffen geführt, die am Rahmen oder der Bodenwanne befestigt sind und entlang diesen verschiebbar. Durch die konvex gebogene Form bewirkt ein Verschieben des Sitzrahmens auch eine Verstellung zwischen einer mehr aufrechten und einer mehr flachliegenden Position des Sitzes, wobei die völlig flach gelegte Position benötigt wird, um den Anhänger flach zusammenfalten zu können, ohne den Sitz zu entnehmen.

Zusätzlich kann der Anhänger im vorderen Bereich einen am Rahmen befestigten ausklappbaren Stützständer aufweisen.

Eine weitere Stützrad-Lösung - die zusätzlich oder anstelle der beschriebenen Lösungen vorhanden sein kann - besteht in einer Stützrad-Einheit, die am vorderen Ende des Anhängers, nämlich an den dort am Rahmen vorhandenen Befestigungspunkten, bei Bedarf angeschraubt und bei Nichtbedarf wieder entfernt und dadurch deaktiviert wird.

Der Sinn dieser Lösung besteht darin, dass hier die Stützräder - im Gegensatz zu den bisher beschriebenen Lösungen - aktiv einen bestimmten Lenkeinschlag aufgezwungen bekommen können, und zwar allein durch die Schräglage des Anhängers, bewirkt durch den hinten schiebenden Benutzer.

Dies wird erreicht, indem die Stützräder an einem Achskörper mittels einer üblichen Achsschenkel-Lenkung befestigt sind, und die Lenkhebel der Lenkung mit einem Punkt an der Stützrad-Einheit oberhalb des Achskörpers befestigt sind. Wird nun die Hochachse des Anhängers schräggestellt, also der Anhänger zu einer Seite geneigt, so erfahren die Räder einen Lenkeinschlag, der zu der Richtung hin lenkt, in welche der Anhänger oben verschwenkt wurde.

Der Aufbau des Anhängers ist vorzugsweise so gestaltet, dass der Rahmen des Anhängers einen horizontal ringförmig umlaufenden Hauptrahmen umfasst. Zum Beispiel können an diesem im vorderen Bereich die Führungsmuffen und/oder der Stützständer formschlüssig umgreifend verklemmt sein. An diesem Hauptrahmen ist eine den Anhänger nach unten verschließende Bodenwanne aus Kunststoff angeordnet, wobei die Bodenwanne oben offen ist und am Hauptrahmen, vorzugsweise mit dem oberen Rand der Bodenwanne, befestigt ist.

Der Rahmen ist vorzugsweise aus hohlen Metallrohren, insbesondere Aluminiumrohren, gefertigt und besitzt daher geringes Gewicht bei hoher Festigkeit.

Das mittig im hinteren Bereich des Anhängers angeordnete Hauptrad ist mittels einer Schwinge an einem Hilfsrahmen befestigt, wobei der Hilfsrahmen im Heckbereich auf der Oberseite der Bodenwanne aufliegt und das eine Ende der Schwinge einerseits sowie das eine Ende eines Stoßdämpfers für die Schwinge andererseits durch die Bodenwanne hindurch mit dem Hilfsrahmen verschraubt ist. Der Stoßdämpfer ist wie üblich zwischen der Schwinge und einem chassis-festen Punkt, in diesem Fall des Hilfsrahmens, angeordnet. Der Hilfsrahmen kann mit dem Hauptrahmen direkt verbunden sein oder nur über die Bodenwanne.

Der Rahmen des Anhängers umfasst außer dem Hauptrahmen auch einen Verdeckrahmen, über den ein Verdeck aus textilem Material oder Folie gespannt werden kann.

Dieser Verdeckrahmen enthält einerseits im Heckbereich beidseits jeweils eine nach oben weisende Stützstrebe, sowie vom oberen Ende dieser Stützstreben zum vorderen Bereich des Anhängers, insbesondere des Hauptrahmens, reichende Verdeckstreben.

Die hinteren Stützstreben sind dabei um eine horizontale Querachse, die etwa in ihrem mittleren Bereich angeordnet ist, zusammenklappbar und mit ihrem unteren Ende gelenkig am Hauptrahmen befestigt.

Ebenso sind die Verdeckstreben am vorderen Ende um eine horizontale Querachse verschwenkbar am Anhänger und insbesondere dessen Hauptrahmen befestigt.

Da zusätzlich Verdeckstreben und Stützstreben an ihrem Verbindungspunkt gelenkig miteinander verbunden sind, kann auf diese Art und Weise durch Einknicken der Stützstreben der Verdeckrahmen bis fast auf die Höhe des Hauptrahmens herunter zusammengefaltet werden.

Für eine gute Stabilität sind die Verdeckstreben dabei Teil eines ringförmig umlaufenden, in der Aufsicht etwa viereckigen Verdeckrahmens.

Zusätzlich kann vom Hauptrahmen im vorderen Bereich ein schräg nach oben aufragender U-Bügel als Zusatzrahmen vorhanden sein, so dass die Verdeckstreben nicht am vorderen Bereich des Hauptrahmens, sondern an dem dann höher liegenden Zusatzrahmen befestigt sind.

Für die Verwendung als Kinderanhänger ist in der Bodenwanne ein Sitz angeordnet, der in einer ersten Bauform aus einem Sitzrahmen und darauf angeordneten Polstern für Sitz und Rückenlehne besteht. Diese Polster bestehen vorzugsweise aus geschäumtem Polypropylen (PPE).

Der Sitzrahmen besteht aus einem Sitzrahmen-Rückenteil und einem Sitzrahmen-Sitzteil, die gelenkig um eine Querachse zueinander klappbar sind. Dadurch kann der Sitz in eine annähernd fluchtende Lage von Sitz und Rückenlehne gebracht werden, was es ermöglicht, den Anhänger in eine flach zusammengefaltete Form zu bringen, wobei die Sitzfläche weiter nach vorne rutscht.

Dazu wird die Rückenlehne des Sitzes nach hinten herab geklappt bis auf den Hilfsrahmen, und anschließend die Stützstreben des Verdeckrahmens nach vorne geklappt, so dass sich das Oberteil der Stützstreben etwa parallel knapp oberhalb der Kopfstütze der Sitzlehne befindet.

Die Schwinge wird - nachdem das Hauptrad ausgebaut ist - hochgeklappt in eine Lage etwa parallel zum horizontalen Schenkel des Hilfsrahmens, und ebenso der Stoßdämpfer. Die Schwinge ist in dieser hoch geklappten Transportlage fixierbar, insbesondere arretierbar. Das ausgebaute Hauptrad kann nun zwischen Oberkante des Hauptrahmens bzw. der Bodenwanne und den herab geklappten Verdeckstreben von der Seite her eingeschoben werden.

An dem Sitzrahmen-Rückenteil des Sitzes ist ferner ein Kopfstützenbügel befestigt oder ein Teil des Sitzrahmen-Rückenteils, der eine Kopfstütze trägt, wobei entweder die Kopfstütze oder der Kopfstützenbügel in der Höhe verstellbar ist gegenüber der Rückenlehne.

Im zusammengeklappten Transportzustand sind die unteren Teile der Stützstreben des Verdeckrahmens seitlich außerhalb neben der Rückenlehne des Sitzes positioniert, so dass sie keine zusätzliche Höhe im zusammengeklappten Zustand benötigen.

Der Sitz ist gegenüber dem Rahmen über Sitzquerstreben befestigt, die von der linken Seite zur rechten Seite des Hauptrahmens durchgehen.

Die eine Querstrebe verläuft dabei durch den Unterteil des Sitzrahmen-Rückenteils hindurch, ist mit dem Ende am Rahmen drehbar befestigt und dient als Schwenkachse zum Verschwenken des Sitzrahmen-Rückenteils und damit zum Flachklappen des Sitzes.

Die andere Querstrebe verläuft durch das Sitzrahmen-Sitzteil und ist mit seinen Enden in seitlichen Führungen im Rahmen vor und zurück verschiebbar.

Falls man einen solchen Einsspuranhänger nicht als Kindertransportanhänger, sondern als z. B. Lastanhänger verwenden will, können von der bisher beschriebenen Bauform leicht Abwandlungen erstellt werden:

Entweder wird der gleiche Rahmen und die gleich Bodenwanne verwendet, in der lediglich kein Sitz montiert ist und folglich auch keine Rahmenquerstreben für den Sitz vorhanden sind.

Anstelle des klappbaren, mit Textilmaterial bespannten Verdeckrahmens kann für den Warentransport auch ein auf die Bodenwanne passender, hochklappbarer oder vollständig abnehmbarer Deckel aus formhaltigem Kunststoffmaterial verwendet werden.

Eine andere Möglichkeit besteht darin, für den Zweck des Warentransports auch einen anderen Hauptrahmen zu verwenden, der an die Abmessungen und das Gewicht der zu transportierenden Güter angepasst ist, also z. B. kürzer ist als der Hauptrahmen für den Kindertransportanhänger.

Somit lässt sich ein Baukasten erstellen, aus dessen Einzelteilen sich auf einfache Art und Weise und unter Vorhaltung einer geringen Anzahl unterschiedlicher Einzelteile sowohl Kindertransportanhänger als auch Lastenanhänger herstellen lassen.

Ein solcher Baukasten umfasst somit zum einen eine immer gleiche Hauptradeinheit bestehend aus Hauptrad, Hilfsrahmen, Schwinge und Stoßdämpfer für die Befestigung des Hauptrades.

Darüber hinaus wenigstens einen Hauptrahmen, vorzugsweise zwei oder mehr verschiedene Hauptrahmen, je nach Anwendungszweck, und zu jedem Hauptrahmen eine passende Bodenwanne.

Der Baukasten umfasst ferner wenigstens zwei verschiedene Abdeckungen, davon eine faltbare, mit Textilmaterial bespannte Abdeckung und die andere bestehend aus einem Deckel aus formbeständigem Kunststoffmaterial.

Der Baukasten umfasst ferner einen Sitz für die Verwendung als Kindertransportanhänger, und natürlich eine Kupplung zum Anhängen an einem Zugfahrzeug.

### c) Ausführungsbeispiele

Ausführungsformen gemäß der Erfindung sind im Folgenden beispielhaft näher beschrieben. Es zeigen:
- Fig. 1a, b:: den Anhänger in perspektivischen Ansichten,
- Fig. 2a-d:: in Einzelansichten,
- Fig. 3:: den Anhänger in der Seitenansicht mit herunter geklappten Verdeckstreben und Deichsel,
- Fig. 4:: der Anhänger mit Schiebestange,
- Fig. 5a, b:: eine weitere Stützrad-Lösung in der Aufsicht auf die Bodenwanne von unten, und
- Fig. 6:: eine aktiv lenkbare Stützrad-Lösung.

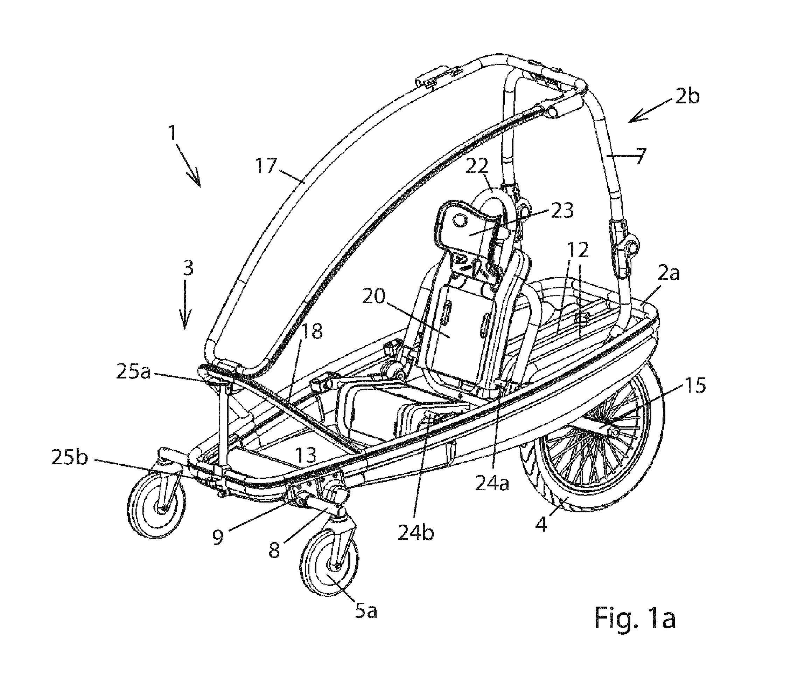

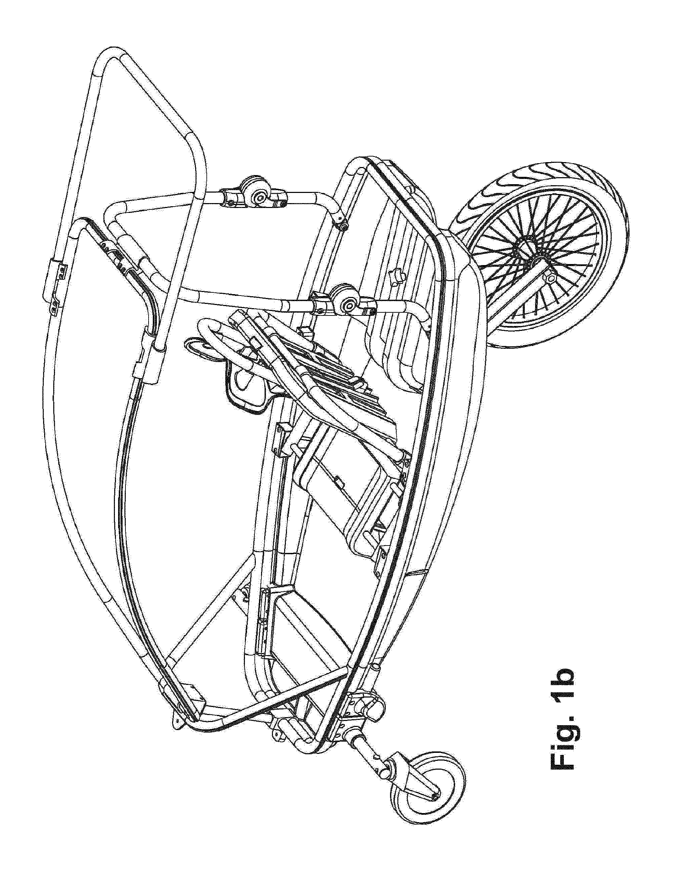

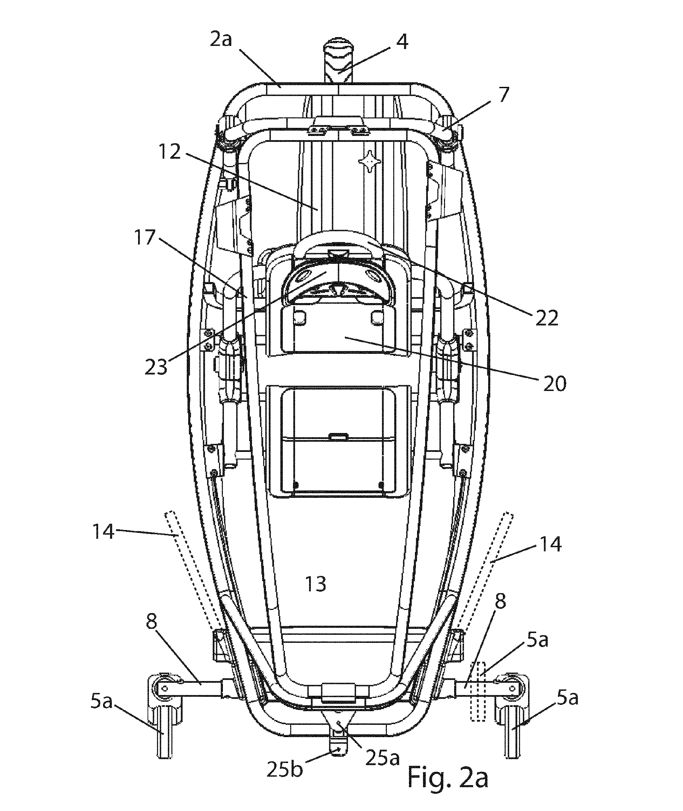

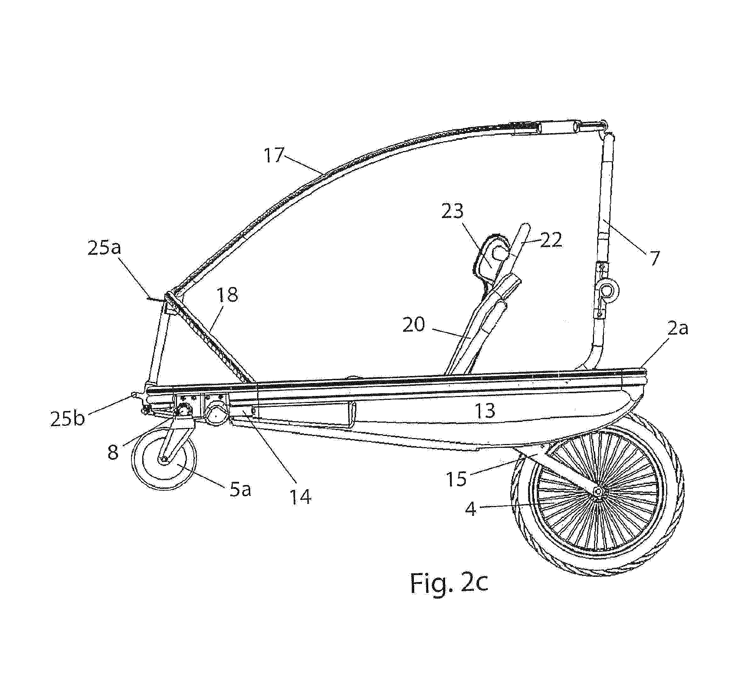

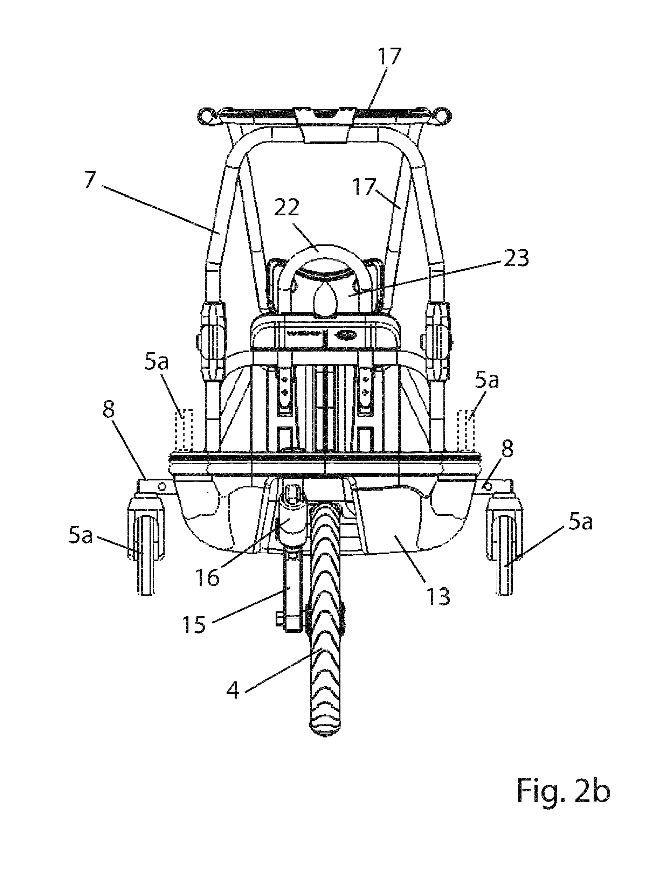

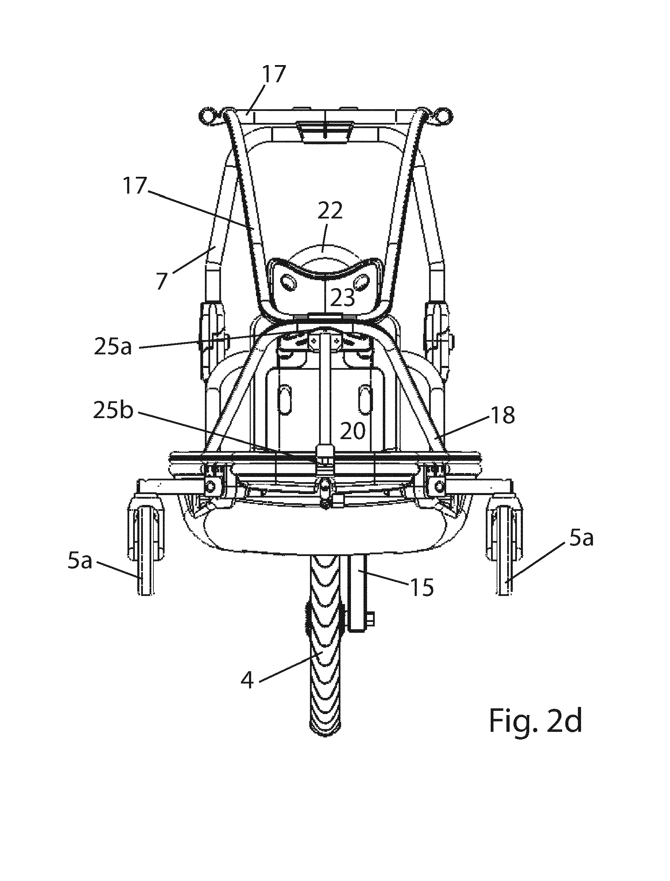

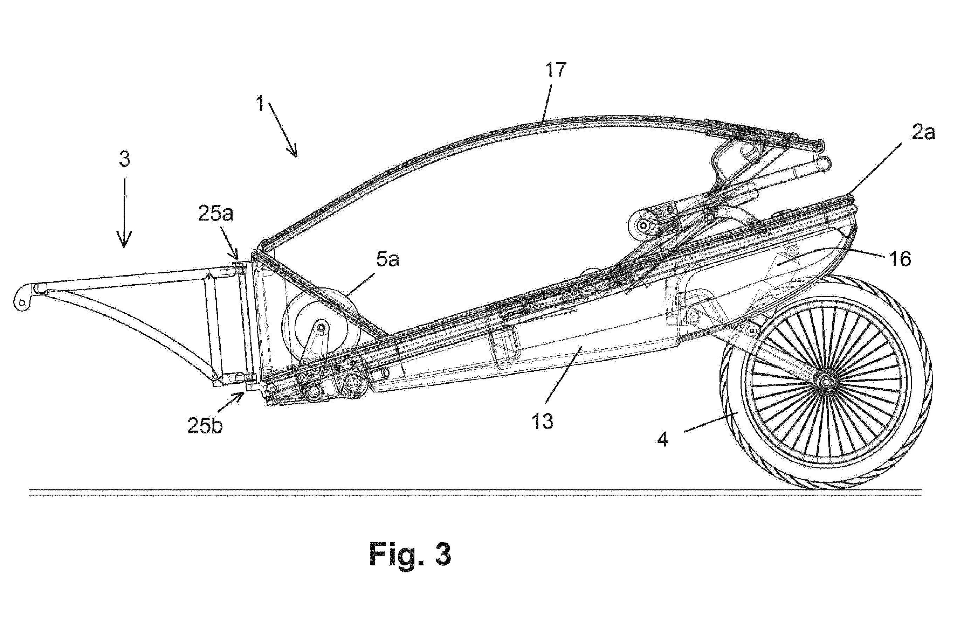

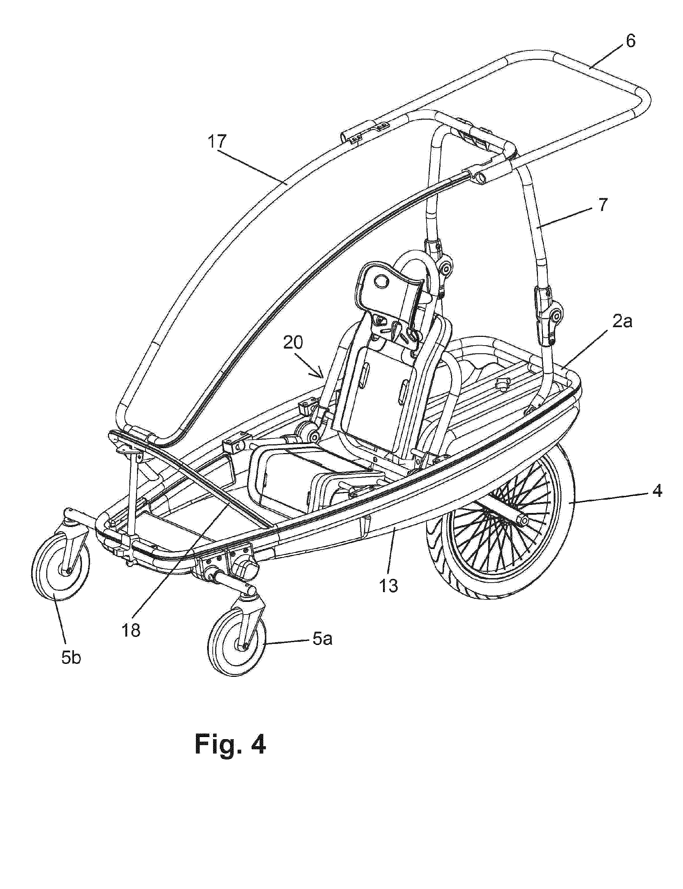

In den Figuren ist der erfindungsgemäße Anhänger 1 in unterschiedlichen Varianten dargestellt:
In der Funktion als Anhänger, also mittels einer Kupplung 25 angehängt an einem nur angedeuteten Hinterrad eines Fahrrades, jedoch mit herab geklappten Verdeckstreben 17 in Figur 3. In den Figuren 1 und 2a-d in einem abgehängten Zustand mit aktivierten, also auf dem Untergrund laufenden, Stützrädern 5a, b, jedoch ohne Schiebestange, aber mit nach oben geklappten Verdeckstreben 17 und in Figur 1b und 4 in einem Zustand gemäß der Figuren 1a und 2, jedoch mit zusätzlich angebrachter Schiebestange 6 zum Schieben des Anhängers 1.

Wie am besten im Vergleich der Figur 3 zu den Figuren 1, 2 und 4 zu erkennen ist, können in einer ersten Ausführungsform die vorderen beiden Stützräder 5 nach unten geklappt und aktiviert sein, indem sie dann auf dem Untergrund aufliegen und den Anhänger 1 im vorderen Bereich abstützen, wie in den Figuren 1, 2 und 4 dargestellt.

Sie können jedoch auch aus dieser den Untergrund kontaktierenden Lage entfernt und damit deaktiviert werden, beispielsweise wie in Figur 3 dargestellt, nach oben geschwenkt, entweder um den horizontalen Rohrstutzen 8, von dem sie getragen sind oder zusammen mit diesem horizontalen Rohrstutzen 8 in dessen Führungsmuffe 9, die am Rahmen befestigt ist. In beiden Stellungen ist eine Arretierung möglich.

Wie die Figuren 1 - 4 zeigen, sind die Stützräder 5a, b als einzeln drehbare und damit lenkbare Nachlaufrollen, also schwenkbar um eine vertikale Achse, ausgebildet.

Wie am besten die Figuren 1 und 2 zeigen, besteht der Anhänger aus einer Bodengruppe, bestehend aus einem in der Aufsicht betrachtet etwa viereckigen, geschlossen horizontal umlaufenden Hauptrahmen 2a, in dessen vorderen Bereich ein Zusatzrahmen 18 in Form eines u-förmigen Bügels schräg nach oben aufragt und mit seinem hinteren unteren Enden am Hautrahmen 2a befestigt, insbesondere verschweißt, ist.

Der Abstand zwischen dem vorderen Bereich des Hauptrahmens 2 und dem Zusatzrahmen 18 ist vorzugsweise durch eine Kunststoffplatte entsprechender Formgebung geschlossen.

In der Mitte am vorderen Ende des Hauptrahmens 2a und Zusatzrahmens 18 befinden sich die Befestigungspunkte 25a, b zum Befestigen der nur in Figur 3 dargestellten Kupplung 3, mit der ein Ankuppeln an einem ziehenden Zweirad möglich ist.

An dem Hauptrahmen 2 ist eine nach oben offene und nach unten geschlossene trogförmige Bodenwanne 13 aus Kunststoff mit ihrem oberen Rand befestigt, insbesondere verschraubt oder verklebt. Im hinteren Bereich weist diese Bodenwanne 13 eine rinnenförmige, mittige Aufwölbung nach oben, jedoch nicht bis zum Niveau des Hauptrahmens 2, auf, in die im Heckbereich unterhalb der Bodenwanne 13 das mittig laufende Hauptrad 4 eintauchen kann.

Das Hauptrad 4 ist am freien Ende einer Schwinge 15 gelagert, die mit ihrem anderen Ende schwenkbar an einer Aufnahme befestigt ist, die durch die Bodenwanne 13 hindurch an einem auf der Aufwölbung liegenden Hilfsrahmen 12 verschraubt ist. Dieser besteht aus zwei in Längsrichtung des Anhängers 1 nebeneinander im Abstand verlaufenden L-Profilen 12a, b, die mittels eines die vorderen, nach unten gerichteten freien Enden verbindenden Querprofils 12 und mithilfe ihrer hinteren freien Enden fest mit dem Hauptrahmen 2a verbunden, insbesondere verschweißt sind.

Die Federung und Dämpfung des Hauptrades 4 erfolgt durch einen Stoßdämpfer 16, der im mittleren Bereich der Schwinge 15 einerseits und an einem Punkt unterhalb der Aufwölbung an einem Aufnahmeteil jeweils schwenkbar befestigt ist, wobei auch dieses Aufnahmeteil wiederum durch die Bodenwanne 13 hindurch mit einem der L-Profile 12a, b verschraubt ist.

Im Inneren, also auf der Oberseite, der Bodenwanne 13 vor der hinteren Aufwölbung ist ein Sitz 20 montiert, in dem ein Kind Platz findet.

Der Sitz 20 besteht aus einem Sitzrahmen 19, der aus zwei schwenkbar miteinander verbundenen Teilen, dem Sitzrahmen-Sitzteil 19a und dem Sitzrahmen-Rückenteil 19b, besteht, an denen jeweils entsprechende Polster 21 a, 21 b als Sitzkissen und Rückenkissen befestigt sind.

Das Sitzrahmenrückenteil 19b umfasst eine Rahmenquerstrebe 24a, die sich durch den unteren Bereich des Sitzrahmen-Rückenteiles 19b hindurch erstreckt und mit ihren freien Enden bis zum Hauptrahmen 2a reicht und dort mit diesem fest verbunden ist. Diese Querstrebe 24a dient als Schwenkachse zum Verschwenken des Sitzrahmen-Rückenteiles 19b, welches auf diese Art und Weise nach hinten geklappt werden kann bis zur Auflage auf dem Hilfsrahmen 12, in der es - wie in Figur 3 dargestellt - nur noch wenig über den Hauptrahmen 2a nach oben aufragt.

An den vorderen unteren Enden des Sitzrahmen-Rückenteiles 19b ist das Sitzrahmen-Sitzteil 19a gelenkig um eine Querachse befestigt.

Bestandteil des Sitzrahmen-Sitzteiles 19a ist eine weitere Sitzquerstrebe 24b, die im vorderen Bereich des Sitzrahmen-Sitzteiles 19a quer verläuft und mit ihren freien Enden nahe des Hauptrahmens 2a endet, dort jedoch nicht fest verschweißt ist, sondern mit ihren freien Enden in dort angeordneten, nicht dargestellten, Führungen von vorne nach hinten verschiebbar ist, um die nötige Ausgleichsbewegung beim Herunterklappen des Sitzrückenteiles zu ermöglichen.

Am Rückenteil des Sitzes ist weiterhin eine Kopfstütze 23 angeordnet, indem diese an einem U-förmigen Kopfstützenbügel 22 befestigt ist, der hinter der Kopfstütze 23 verläuft und mit seinen nach unten weisenden frei endenden Schenkeln in entsprechende Führungen des Rückenteiles des Sitzes einschiebbar ist, die mit dem Sitzrahmenrückenteil 19b verbunden sind. Durch Hochziehen des Kopfstützenbügels 22 kann die Höhe der Kopfstütze 23 eingestellt werden. Für den zusammengeklappten Zustand des Anhängers, wie in Figur 3 dargestellt, wird der Kopfstützenbügel 22 vorzugsweise so weit wie möglich eingeschoben.

Zusätzlich zu den Stützrädern 5a, b kann auf wenigstens einer Seite, vorzugsweise beiden Seiten, im vorderen Bereich außen am Hauptrahmen 2 ein Stützständer 14 befestigt sein, der herabklappbar und damit aktivierbar ist, um den Anhänger 1 auf dem Untergrund abstellen zu können, ohne dass er wegrollen oder umkippen kann.

Der oder die Stützständer 14 sind unabhängig von den Stützrädern 5a, b aktivierbar und deaktivierbar, können separate Baugruppen sein oder an ein und derselben Baugruppe angeordnet sein, indem z. B. mittels einer Schwenkbewegung in die eine Richtung das Stützrad und einer Schwenkbewegung in die andere Richtung der Seitenständer aktiviert werden kann.

Um das auf dem Sitz 20 des Anhängers 1 sitzende Kind vor Sonne oder Regen schützen zu können, kann über den Anhänger 1 ein Verdeck gespannt werden, welches in bekannter Art und Weise aus einem über einen Verdeckrahmen gespanntem, flexiblem Textilmaterial oder Folienmaterial bestehen kann mit durchsichtigen und undurchsichtigen Bereichen, und mittels Klettverschlüssen oder Reißverschlüssen bereichsweise geöffnet werden kann.

Der Verdeckrahmen 2b besteht zum einen aus einer in der Aufsicht betrachtet wiederum rechteckigförmig geschlossenen umlaufenden Verdeckstrebe 17, deren vorderer Querschenkel verschwenkbar um eine Querachse am oberen Bereich des Zusatzrahmens 18 befestigt ist und an seinem hinteren Querschenkel in gleicher Weise schwenkbar am oberen quer verlaufenden Verbindungsschenkel einer U-förmigen Stützstrebe 7, die mit ihren unteren freien Enden schwenkbar auf der Innenseite des Hauptrahmens 2a befestigt ist. Diese frei nach unten weisenden Schenkel der Stützstrebe 7 weisen in ihrem mittleren Bereich Gelenke auf, mit denen Sie um eine horizontale Schwenkachse zusammengeklappt werden können, so dass sich das Gelenk nach vorne und der obere Querschenkel der Stützstrebe 7 nach hinten unten bewegt bis er sich mit dem oberen Teil der Stützstrebe 7 fast parallel verlaufend zum hinteren Teil des Hauptrahmens 2a in geringem Abstand über diesem befindet, wie in Figur 3 dargestellt, was den flach zusammengeklappten Zustand des Anhängers darstellt.

Die umlaufende Verdeckstrebe 17 liegt dabei in der Aufsicht betrachtet vollständig innerhalb des Hauptrahmens 2a wie auch der Sitzrahmen 19. Seitlich nach außen über den Hauptrahmen 2a und damit die Bodenwanne 13 stehen lediglich die Stützräder 5a, b vor, die außerdem nach unten klappbar sind in den aktivierten Zustand, und auch in Querrichtung mit ihren Rohrstutzen 8 aus der Führungsmuffe 9 herausgezogen werden können, um vorne eine große Stützbreite zu erreichen.

Im deaktivierten Zustand werden die Rohrstutzen 8 eingeschoben, so dass sich die deaktivierten Stützräder 5a, b dann vorzugsweise auch innerhalb der Breite des Hauptrahmens 2 befinden, wie in Figur 2a angedeutet.

Um den Anhänger 1 im zusammengeklappten Zustand, meist dem Aufbewahrungszustand, in den Außenabmessungen möglichst stark zu verringern, kann gegenüber der Darstellung in Figur 3 auch noch das Hauptrad 4 z. B. mittels Lösen der Durchsteckachse von der Schwinge 15 gelöst und auf den Hauptrahmen 2a im mittleren Bereich unter die Verdeckstrebe 17 gelegt werden. Dabei steht das Hauptrad 4 nicht oder nur geringfügig seitlich über den Hauptrahmen 2a vor.

Nach Lösen des Stoßdämpfers 16 an seinem oberen, chassis-seitigen Befestigungspunkt kann dieser dann nach unten auf die Schwinge 15 herab geklappt und zusammen mit dieser nach oben in die Ausnehmung der Unterseite der Bodenwanne 13 geklappt werden, so dass in der Seitenansicht die gesamte hintere Radeinheit in der Außenkontur der Bodenwanne samt herab geklapptem Verdeckrahmen untergebracht ist.

Figur 3 zeigt ferner, dass die gabelförmige Kupplung 3, die vom Anhänger 1 ganz abgenommen werden kann - wie die Figuren 1 und 2 zeigen - in einer weiteren Bauform auch um eine querliegende Schwenkachse auf die Oberseite des Verdecks oder bei nicht vorhandenem Verdeck noch weiter nach hinten unten bis zur Auflage auf der Bodenwanne 13 herabgeklappt werden kann, was für den Aufbewahrungszustand sinnvoll sein kann.

Der erfindungsgemäße Anhänger 1 soll im abgekuppelten Zustand und mit aktivierten Stützrädern 5a, b als Schiebewagen zum Transportieren eines Kindes auf dem Sitz 20 oder bei demontiertem Sitz auch zum Transport von anderen Lasten benutzt werden können.

Geschoben wird der Anhänger 1 dann von hinten mittels einer U-förmigen Schiebestange 6, die mit ihren freien Schenkeln nach vorne weisend in entsprechende Aufnahmen des Hauptrahmens beispielsweise einschiebbar und dort fixierbar ist, die - wie in Figur 4 dargestellt - sich am hinteren Bereich der Verdeckstrebe 17 befinden und in Längsrichtung 10 weisen. Der mittige Querschenkel der U-förmigen Schiebestange 6 befindet sich dann auf Höhe des hinteren Endes der Verdeckstrebe 17 und ausreichend weit hinter dem hinteren Ende des Hauptrahmens 2, so dass eine schiebende Person mit ihren Beinen nicht mehr an dem Anhänger 1 anstößt.

Die Schiebestange 6 kann jedoch auch dauerhaft am Hauptrahmen befestigt bleiben, und bei Nichtbedarf in eine deaktivierte Stellung hoch geklappt werden, in der sie dann gleichzeitig als Überrollbügel dient, für den Fall, dass der Anhänger 1 umkippen sollte.

Das Verdeck wird am Rahmen, vorzugsweise dem Hauptrahmen 2a, befestigt, indem es vorzugsweise mit einem Keder des nicht dargestellten Verdecks in einer hinterschnittenen Nut des den Hauptrahmen 2a bildenden Profils, i. d. R. eines Aluminiumprofils, eingeschoben wird.

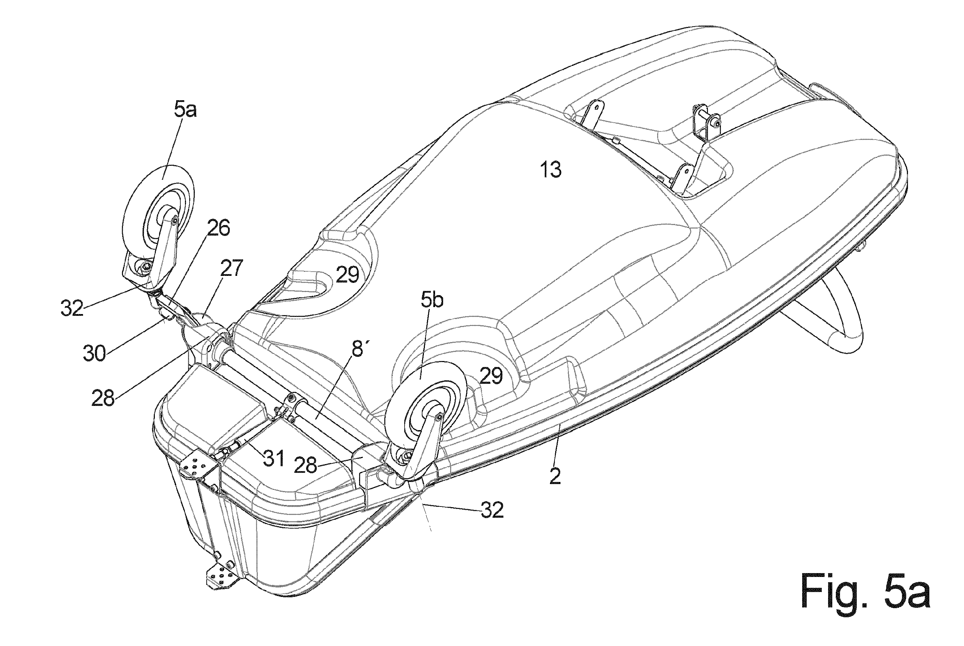

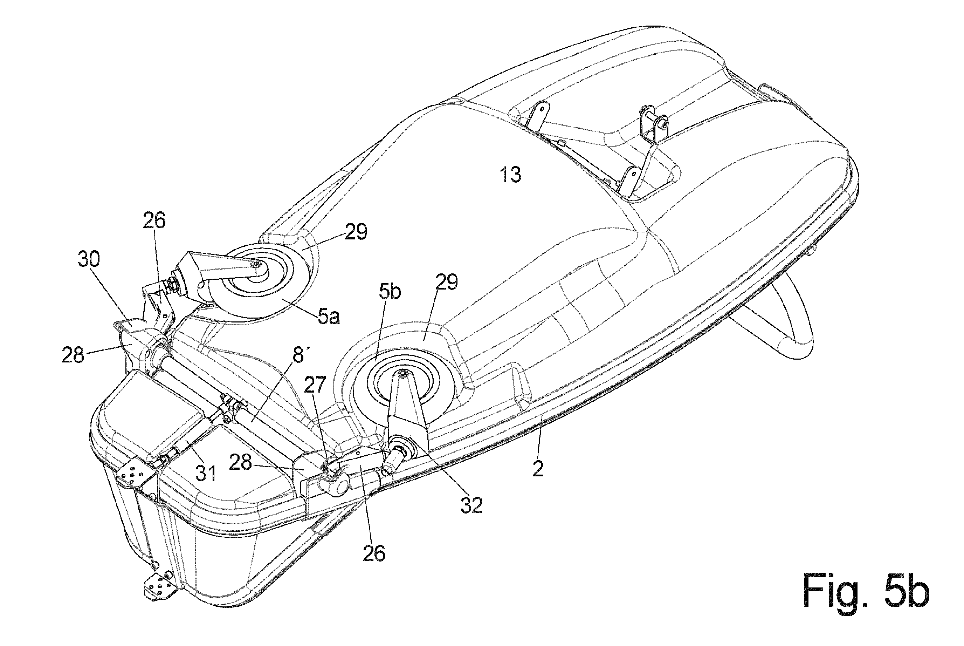

Die Figuren 5 a, b zeigen eine weitere Ausführung der Stützräder 5a, b, die in der Figur 5a im aktivierten und in Figur 5b im deaktivierten Zustand dargestellt sind:
Die Stützräder 5 a, b sind jeweils einerseits als Nachlaufräder ausgebildet und um eine im aktivierten Zustand gemäß Figur 5a aufrecht stehende Hochachse 32 verschwenkbar, andererseits an einer Winkelstrebe 26 befestigt, die zusammen mit dem von der linken zur rechten Seite durchgehenden Querrohr 8' um dessen Erstreckungsrichtung, also die Querrichtung, in beidseits am Rahmen 2 des Anhängers befestigten Lagerböcken 28 schwenkbar sind.

Dabei sind die Winkelstreben 26 mit dem von der Erstreckungsrichtung des Querrohres 8' abstrebenden Schenkel in einer Kulissenführung 27 geführt, die so geformt ist, dass sie beim Verschwenken in die aktivierte Position die Winkelstreben 26 seitlich nach außen drückt und beim Verschwenken in die deaktivierte Position seitlich nach innen. Zu diesem Zweck sind die Winkelstreben 26, beispielsweise mit Hilfe von Rohrstutzen, axial verschiebbar, aber drehfest auf den Enden des Querrohres 8' befestigt.

Beim Verschwenken in die deaktivierte Position werden die Stützräder 5a,b aufgrund des ersten stattfinden Kontaktes mit den Ausnehmungen 29 automatisch richtig und passgenau in der entsprechend geformten Ausnehmung 29 abgelegt, so dass die Stützräder 5a,b in der deaktivierten Position kaum oder gar nicht nach unten über die Bodenwanne 13 vorstehen. Das Verschwenken von der aktivierten in die deaktivierte Lage und/oder gegebenenfalls auch umgekehrt erfolgt mittels eines Fußschalters 30 in Form eines quer zur Erstreckungsrichtung des Querrohres 8' von der Winkelstrebe 26 abragenden Platte. Durch Druck mit dem Fuß auf diesen Fußschalter 30 wird die Schwenkbewegung des Querrohres 8' eingeleitet, die durch die Kraft einer Gasdruckfeder 31 vollendet wird:

Die Gasdruckfeder 31 ist zwischen einem rahmenfesten Punkt, in diesem Fall vorn in der Mitte des Rahmens 2, und einem von dem Querrohr 8' mittig nach außen vorstehenden Anlenkhebel angeordnet. Der Anlenkhebel ragt in einer solchen Drehstellung vom Querrohr 8' ab, dass er etwa in der Mitte der Schwenkstellungen zwischen aktivierter und deaktivierter Position der Stützräder 5a, b seinen Totpunkt besitzt, also genau in Richtung der Gasdruckfeder 31 weist.

In allen weiteren Positionen drückt damit die Kraft der Gasdruckfeder 31 das Querrohr 8' in Richtung zunehmenden Verschwenkens, und die Räder entweder in die vollständig deaktivierte oder vollständig aktivierte Position.

Falls die Räder - vor allem in der aktivierten Position - nicht einrasten, wirkt die Gasdruckfeder 31 zusätzlich als Federung für die Stützräder 5a, b, da sie bei vom Untergrund verursachten Schlägen auf die Stützräder diese zunächst in Richtung deaktivierte Stellung ausweichen lässt, aber danach wieder in die vollständig aktivierte Stellung zurückdrückt.

Falls die Stützräder 5a, b in einer ihrer Endpositionen einrasten, muss vor oder gleichzeitig mit der Betätigung des Fußschalters 30 eine Entriegelung manuell erfolgen, die jedoch auch in die Betätigung des Fußschalters 30 integriert sein kann.

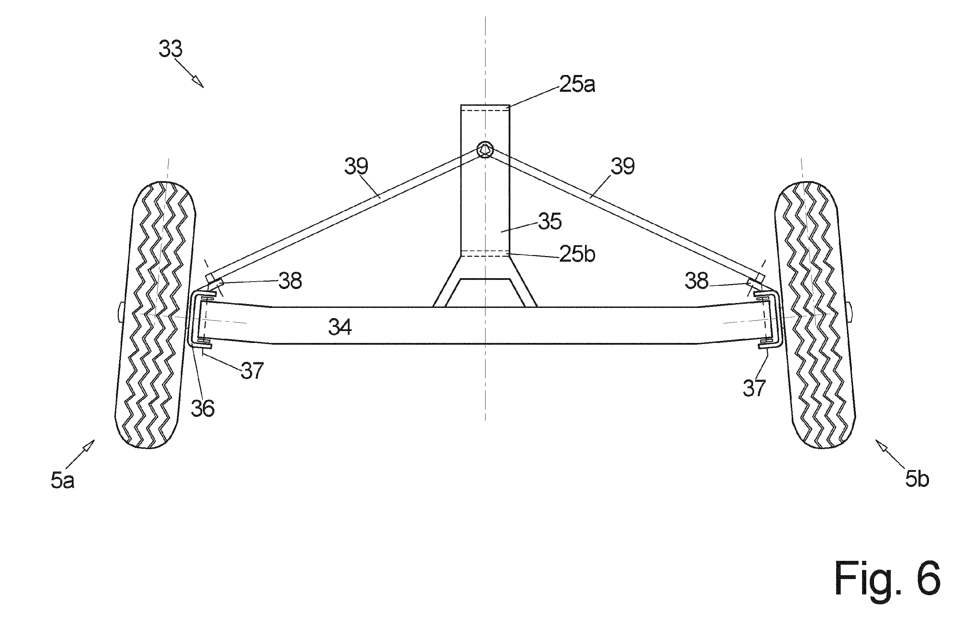

Die Figur 6 zeigt eine weitere Stützrad-Lösung, bei der jedoch die Stützräder 5a, b Bestandteil einer Stützradeinheit 33 sind, die am Anhänger 1, also dessen Rahmen 2, an den beiden vorderen Befestigungspunkten 25a, b montiert werden kann. Eventuell an dem Anhänger 1 bereits vorhandene weitere Stützräder bleiben dann in der deaktivierten Position oder sind nicht vorhanden.

Der Vorteil dieser Stützradeinheit 33 besteht darin, dass hier die Stützräder 5a, b aktiv lenkbar sind, und zwar allein durch Schräglage des Anhängers 1 um seine Längsachse, die ja von dem hinten an der Schiebestange 6 schiebenden Benutzer aufgrund des nur Hauptrades 4 leicht bewirkt werden kann.

Zu diesem Zweck besteht die Stützradeinheit 33 zunächst aus einem Achskörper 34 in Form eines zum Beispiel Vierkant-Rohrprofiles. Ein Befestigungselement 35, beispielsweise in Form einer Platte, welches Befestigungspunkte zum Verschrauben mit den Befestigungspunkten 25a, b des Rahmens 2 des Anhängers 1 besitzt, ist an der Front des Anhängers an diesem Befestigungspunkten 25a, b verschraubt. Im unteren Bereich des Befestigungselementes 35 ist der Hacks Körper 34, insbesondere die Mitte des Achskörpers 34, gelenkig um eine Schwenkachse 40 befestigt, die in Fahrtrichtung, also in Blickrichtung der Figur sechs, verläuft.

Bei dieser lenkbaren Konstruktion handelt es sich im Grunde um eine Neige-Lenkung, indem sich durch jedes der beiden Enden des Achskörpers 34 von oben nach unten ein Achsschenkelbolzen 37 hindurch erstreckt und oben und unten aus dem Achskörper 34 vorsteht. Ein gabelförmiger Achsschenkel 36, an dessen mittleren Schenkel auf der Außenseite jeweils eines der Stützräder 5a, b drehbar befestigt ist, greift mit seinen beiden freien Schenkeln oben und unten über das Ende des Achskörpers 34 und ist auf den Enden des etwa vertikal stehenden Achsschenkels 36 verschwenkbar befestigt.

Damit die Stützräder 5a, b einen Sturz erhalten, was die Kippsicherheit des Anhängers 1 erhöht, sind die seitlichen Enden des Achskörpers 34 geringfügig nach oben gebogen.

Der Lenkeinschlag der Stützräder 5a, b wird wie bei Neige-Lenkungen üblich dadurch bewirkt, dass - beabstandet vom Achsschenkelbolzen 37, beispielsweise beabstandet nach hinten - ein Lenkhebel 38 absteht. Jeder dieser Lenkhebel 38 ist mittels einer Lenkstange 39 mit einem Punkt am Befestigungselement 35 verbunden. Wird nun der Anhänger 1 um die Längsachse verschwenkt, also die in Figur 6 eingezeichnete Hochachse schräggestellt, so werden dadurch automatisch die Stützräder 5a, b in eine Lenkstellung gebracht, die eine Kurvenfahrt zu derjenigen Seite bewirkt, nach der das obere Ende der Hochachse geneigt wird.

### BEZUGSZEICHENLISTE

- 1: Anhänger
- 2: Rahmen
- 2a: Hauptrahmen
- 2b: Verdeckrahmen
- 3: Kupplung
- 4: Hauptrad
- 5a, b: Stützrad
- 6: Schiebestange
- 7: Stützstrebe
- 8: Rohrstutzen
- 8': Querrohr
- 9: Führungsmuffe
- 10: Längsrichtung
- 11: Querrichtung
- 11': Querachse
- 12: Hilfsrahmen
- 12a, b: L-Profil
- 12c: Querprofil
- 13: Bodenwanne
- 14: Stützständer
- 15: Schwinge
- 16: Stoßdämpfer
- 17: Verdeckstrebe
- 18: Zusatzrahmen
- 19: Sitzrahmen
- 19a: Sitzrahmen-Sitzteil
- 19b: Sitzrahmen-Rückenteil
- 20: Sitz
- 21 a, b: Polster
- 22: Kopfstützen-Bügel
- 23: Kopfstütze
- 24a, b: Rahmenquerstrebe
- 25a, b: Befestigungspunkte
- 26: Winkelstrebe
- 27: Kulissenführung
- 28: Lagerbock
- 29: Ausnehmungen
- 30: Fußschalter
- 31: Gasdruckfeder
- 32: Hochachse
- 33: Stützradeinheit
- 34: Achskörper
- 35: Befestigungselement
- 36: Achsschenkel
- 37: Achsschenkelbolzen
- 38: Lenkhebel
- 39: Lenkstange
- 40: Schwenkachse

## Patentansprüche

1. Einspur-Anhänger (1) zum Anhängen an ein Fahrrad oder ein anderes schmal bauendes Zugfahrzeug, mit
- einem Chassis mit einem tragenden Rahmen (2), insbesondere einem Rohrrahmen,
- einer Kupplung (3) am vorderen Ende des Anhängers (1),
- einem auf der Längsmitte (10') im hinteren Bereich des Anhängers angeordneten Hauptrad (4),
**dadurch gekennzeichnet, dass**
im vorderen Bereich am Rahmen (2) beidseits jeweils ein aktivierbares und deaktivierbares Stützrad (5a, b) angeordnet ist.

2. Einspur-Anhänger nach Anspruch 1,
**dadurch gekennzeichnet, dass**
- die Stützräder (5a, b) seitlich über die Breite des Chassis ausfahrbar sind, und/oder
- jedes Stützrad (5a, b) verschwenkbar ist
- entweder um eine in Längsrichtung (10) verlaufende Schwenkachse von einer deaktivierten Lage etwa horizontal unter dem Chassis in eine aktivierte, aufrecht stehende Lage seitlich neben dem Chassis,
- oder um eine Querachse (11') in eine deaktivierte Lage hochklappbar ist.

3. Einspur-Anhänger nach einem der vorhergehenden Ansprüche, **dadurch gekennzeichnet, dass**
- der Anhänger in seinem hinteren Bereich eine demontierbare und/oder ausklappbare und/oder ausziehbare Schiebestange (6), insbesondere eine in Querrichtung (11) hinter dem Rest des Anhängers (1) verlaufende Schiebestange (6), aufweist und insbesondere
- die Schiebestange (6) am Hauptrahmen (2a) und/oder an den Stützstreben (7) des Verdeckrahmens (2b) befestigt ist und insbesondere aus einem U-Bügel besteht.

4. Einspur-Anhänger nach einem der vorhergehenden Ansprüche, **dadurch gekennzeichnet, dass**
- jedes Stützrad (5a, b) am freien Ende eines relativ zum Rahmen (2) ausfahrbaren Rohrstutzens (8) angeordnet ist, der drehbar und in Querrichtung (11) ausfahrbar gegenüber einer am Rahmen (2) befestigbaren Führungsmuffe (9) angeordnet ist, und/oder
- der Anhänger (1) einen im vorderen Bereich am Rahmen (2) befestigten, ausklappbaren Stützständer (14) aufweist der entweder ein Seitenständer ist und mit je einem Stützrad (5) eine Baugruppe bildet oder ein Mittelständer ist, an dem beide Stützräder (5a, b) befestigt sind.

5. Einspur-Anhänger nach einem der vorhergehenden Ansprüche,
**dadurch gekennzeichnet, dass**
- die Stützräder (5a, b) in der aktivierten als auch der deaktivierten, insbesondere hochgeklappten und in den Rohrstutzen (8) eingeschobenen Position einrasten, und/oder
- die Stützräder (5a, b) wenigstens im aktivierten Zustand um eine aufrecht stehende Achse verschwenkbar, insbesondere drehbar sind.

6. Einspur-Anhänger nach einem der vorhergehenden Ansprüche, **dadurch gekennzeichnet, dass**
- am Hauptrahmen (2a) eine den Anhänger nach unten verschließende Bodenwanne (13) aus Kunststoff befestigt ist, und/oder
- die Stützräder (5a, b) an einem gegenüber dem Chassis um seine Längsachse drehbaren Querrohr (8') befestigt sind und insbesondere die Enden des Querrohres (8') gegenüber dessen Mittelteil teleskopierbar sind.

7. Einspur-Anhänger nach einem der vorhergehenden Ansprüche,
**dadurch gekennzeichnet, dass**
- die Stützräder über gekröpfte Winkelstreben (26) an den Enden des Querrohres (8') befestigt sind und die Winkelstreben (26) in einer Kulissenführung (27) des Lagerbockes (28) beim Drehen des Querrohres (8') so geführt werden, dass die Enden des Querrohres (8') zur Seite nach außen teleskopiert werden, und/oder
- die Stützräder (4, 5) in der deaktivierten Stellung in etwa einer Horizontalebene liegend in passgenau ausgeformten Ausnehmungen (29) in der Unterseite der Bodenwanne (13) automatisch abgelegt werden.

8. Einspur-Anhänger nach einem der vorhergehenden Ansprüche,
**dadurch gekennzeichnet, dass**
die Stützräder (5a, b) durch Betätigen eines quer zur Erstreckungsrichtung von dem Querrohr (8') abstrebenden Fußschalters (30) von der aktivierten in die deaktivierte aktivierte Position oder umgekehrt verschwenkbar sind, und insbesondere das Verschwenken mittels eines Federelementes wie einer Gasdruckfeder (31) in der jeweiligen Endphase der Schwenkbewegung unterstützt wird, die insbesondere als Über-Totpunkt-Feder an dem Querrohr (8') angreift.
(Hauptradschwinge)

9. Einspur-Anhänger nach einem der vorhergehenden Ansprüche,
**dadurch gekennzeichnet, dass**
- das Hauptrad (4) an einem Hilfsrahmen (12) mittels einer Schwinge (15) befestigt ist, und der Hilfsrahmen (12) im Heckbereich auf der Oberseite der Bodenwanne (13) aufliegt und das eine Ende der Schwinge einerseits sowie das eine Ende eines Stoßdämpfers (16) andererseits durch die Bodenwanne (13) hindurch mit dem Hilfsrahmen (12) verschraubt sind, und insbesondere
- der Hilfsrahmen (12) aus zwei im Abstand parallel in Längsrichtung (10) verlaufenden L-Profilen (12a, b) besteht, die in der Seitenansicht L-förmig gekröpft sind und an ihrem vorderen, nach unten weisenden Ende über ein durchgehendes Querprofil (12c) miteinander verbunden sind, dessen Länge deutlich größer ist als der Abstand der beiden L-Profile (12a, b).

10. Einspur-Anhänger nach einem der vorhergehenden Ansprüche,
**dadurch gekennzeichnet, dass**
- der Rahmen (2) einen Verdeckrahmen (2b) umfasst mit im Heckbereich beidseits nach oben weisenden Stützstreben (7) sowie vom oberen Ende zum vorderen Bereich des Anhängers reichenden Verdeckstreben, wobei
- die Stützstreben (7) um eine horizontale Querachse (11') in ihrem mittleren Bereich zusammenklappbar sind und am unteren Ende gelenkig am Hauptrahmen (2a) befestigt sind, insbesondere am Hauptrahmen (2a),
- die Verdeckstreben (17) am vorderen Ende der Stützstreben (7) um eine horizontale Querachse verschwenkbar am Rest des Anhängers (1), insbesondere des Hauptrahmens (2a), befestigt sind und
- insbesondere die Verdeckstrebe (17) und die Stützstreben (7) an ihrem Verbindungspunkt gelenkig miteinander verbunden sind.

11. Einspur-Anhänger nach einem der vorhergehenden Ansprüche,
**dadurch gekennzeichnet, dass**
- die Verdeckstreben (17) Teil eines ringförmig umlaufenden, in der Aufsicht etwa viereckigen, Verdeckrahmens sind und/oder im vorderen Bereich vom Hauptrahmen (2a) schräg nach vorne oben aufragend ein U-Bügel (18) abstrebt, an dessen oberen Ende die Verdeckstrebe (17) befestigt sind, und/oder
- auf der Bodenwanne (13) ein Sitz (20) angeordnet ist, der aus einem Sitzrahmen (19) und darauf angeordneten Polstern (21 a, b) für Sitz und Rückenlehne besteht und insbesondere die Polster (21 a, b) aus geschäumtem PPE bestehen.

12. Einspur-Anhänger nach einem der vorhergehenden Ansprüche,
**dadurch gekennzeichnet, dass**
- auf der Bodenwanne (13) ein Sitz (20) angeordnet ist, der aus einem Sitzrahmen (19) besteht, der in der Seitenansicht konvex nach unten gebogen ist, und in Führungsmuffen, die auf der Bodenwanne (13) befestigt sind, in Längsrichtung (10) verschiebbar und dadurch von einer mehr aufrechten in eine mehr flachliegende Position verschiebbar ist, und/oder
- der Sitz mit seinem Rahmen in eine Ebene parallel zur Ebene des Hauptrahmens des Chassis bringbar ist für das Zusammenklappen des Anhängers.
(zusammengeklappter Zustand)

13. Einspur-Anhänger nach einem der vorhergehenden Ansprüche,
**dadurch gekennzeichnet, dass**
im zusammengeklappten Zustand des Anhängers (1),
- die Rückenlehne des Sitzes (20) nach hinten herabgeklappt ist bis auf den Hilfsrahmen (12),
- die Stützstreben (7) des Verdeckrahmens (2b) nach vorne unten eingeklappt sind, so dass sich das Oberteil der Stützstreben (22) etwa parallel knapp oberhalb des Kopfstützen-Bügels (22) befindet,
- die Schwinge (15) hochgeklappt ist in eine Lage etwa parallel zum horizontalen Schenkel des Hilfsrahmens (12) und
- der Stoßdämpfer gegenüber der Schwinge (15) in eine zu dieser parallelen Lage geklappt ist.

14. Einspur-Anhänger nach einem der vorhergehenden Ansprüche,
**dadurch gekennzeichnet, dass**
- im zusammengeklappten Zustand die Verdeckstrebe (17) in einem solchen Abstand über dem Hauptrahmen (2a) verlaufen, dass dazwischen das demontierte Hauptrad (4) horizontal liegend angeordnet werden kann, und/oder
- die Schwinge (15) in der Transportlage fixierbar, insbesondere arretierbar, ist.

15. Einspur-Anhänger nach einem der vorhergehenden Ansprüche,
**dadurch gekennzeichnet, dass**
- der Sitz mit dem Hauptrahmen über entsprechende Rahmenquerstreben (24a, b) verbunden ist,
- die eine Querstrebe durch den Unterteil des Sitzrahmenrückenteils (19b) hindurch verläuft und als Schwenkachse zum Verschwenken des Sitzrahmen-Rückenteils (19b) dient.

16. Einspur-Anhänger nach einem der vorhergehenden Ansprüche,
**dadurch gekennzeichnet, dass**
im zusammengeklappten Transportzustand die unteren Teile der Stützstreben (7) seitlich außerhalb neben der Rückenlehne des Sitzes (20) verlaufen.

17. Einspur-Anhänger nach einem der vorhergehenden Ansprüche,
**dadurch gekennzeichnet, dass**
- der Anhänger (1) eine Stützrad-Einheit (33) aufweist, die einen Achskörper (34) umfasst, der relativ zum Anhänger (1) um die Längsachse verschwenkbar ist und an dessen Enden jeweils ein mittels einer Neige-Lenkung aktiv lenkbares Stützrad (5a, b) befestigt ist, deren Lenkhebel (38) mit einem oberhalb des Achskörpers (34) liegenden Befestigungspunkt der Stützradeinheit (33) verbunden ist und insbesondere
- die Stützradeinheit (33) mit den Befestigungspunkten (25a, b) des Rahmens (2) des Anhängers (1) verschraubt ist.
